# EUROPÄISCHE PATENTANMELDUNG

(11) **EP 3 825 062 A1**
(43) Veröffentlichungstag der Anmeldung: **26.05.2021**
(21) Anmeldenummer: 19210594.8
(22) Anmeldetag: 21.11.2019
(51) Int. Cl.: B24B 55/00, B23Q 11/00, B24B 23/02, B24B 49/00

(54) **VERFAHREN ZUM BETREIBEN EINER WERKZEUGMASCHINE UND WERKZEUGMASCHINE**

(71) Anmelder: Hilti Aktiengesellschaft, 9494 Schaan (LI)
(72) Erfinder: Ivanova, Stoyanka, 86899 Landberg am Lech (DE); Fischer, Axel, 86879 Wiedergeltingen (DE); Koschel, Christian, 86199 Augsburg (DE); Friedmann, Jan, 86920 Denklingen (DE); Mandl, Franz, 6800 Feldkirch (AT); Icöz, Can, 80796 München (DE); Talpeanu, Dan, 70186 Stuttgart (DE); Schmid, Florian, 9470 Buchs SG (CH)
(74) Vertreter: Hilti Aktiengesellschaft Corporate Intellectual Property

(57) **Zusammenfassung**

Die Erfindung betrifft ein Verfahren zum Betreiben einer Werkzeugmaschine (1), insbesondere eines Winkelschleifers, mit einem mit einer Abtriebswelle (7) drehbar in Wirkverbindung bringbaren Werkzeug (3), wobei die Werkzeugmaschine (1) eine Antriebseinrichtung (4) zur Betätigung der Abtriebswelle (7), eine Steuerungseinrichtung (8) zur Betätigung der Antriebseinrichtung (4) und wenigstens eine mit der Steuerungseinrichtung (8) wirkverbundene Sensoreinrichtung (9, 10) aufweist. Mittels der Sensoreinrichtung (9, 10) wird ermittelt, ob eine Einrichtung (3, 11) in definierter Weise mit einem definierten Bereich der Werkzeugmaschine (1) wirkverbunden ist, wobei die Steuerungseinrichtung (8) einen Betrieb der Antriebseinrichtung (4) nur bei positivem Abfrageergebnis freigibt. Es wird weiterhin eine Werkzeugmaschine (1) zur Durchführung eines derartigen Verfahrens beschrieben.

## Beschreibung

Die Erfindung betrifft ein Verfahren zum Betreiben einer Werkzeugmaschine, insbesondere eines Winkelschleifers, mit einem mit einer Abtriebswelle drehbar in Wirkverbindung bringbaren Werkzeug, beispielsweise einer Trenn-, Schleif- oder Diamantscheibe, und eine Werkzeugmaschine zur Durchführung eines derartigen Verfahrens.

Bei Werkzeugmaschinen, beispielsweise Winkelschleifern, Sägemaschinen oder dergleichen besteht die Gefahr, dass die Werkzeugmaschine auch ohne ein angeordnetes Werkzeug und insbesondere ohne eine angeordnete Schutzeinrichtung betrieben wird. Also Folge hiervon kann es passieren, dass ein Betrieb der Werkzeugmaschine zu einer Verletzung des Anwenders führt.

Es ist daher Aufgabe der vorliegenden Erfindung, ein Verfahren zum Betreiben einer Werkzeugmaschine zu schaffen, mit dem die Gefahr einer Verletzung für einen Anwender bei einem Betrieb der Werkzeugmaschine reduziert ist. Darüber hinaus ist es Aufgabe der vorliegenden Erfindung, eine Werkzeugmaschine zur Durchführung eines derartigen Verfahrens zu schaffen.

Es wird somit ein Verfahren zum Betreiben einer Werkzeugmaschine, insbesondere eines Winkelschleifers, mit einem mit einer Abtriebswelle in Wirkverbindung bringbaren Werkzeug vorgeschlagen, wobei die Werkzeugmaschine eine Antriebseinrichtung zur Betätigung der Abtriebswelle, eine Steuerungseinrichtung zur Betätigung der Antriebseinrichtung und wenigstens eine mit der Steuerungseinrichtung wirkverbundene Sensoreinrichtung aufweist. Erfindungsgemäß ist vorgesehen, dass mittels der Sensoreinrichtung ermittelt wird, ob eine Einrichtung in definierter Weise mit einem definierten Bereich der Werkzeugmaschine wirkverbunden ist und die Steuerungseinrichtung einen Betrieb der Antriebseinrichtung insbesondere auf anwenderseitige Anfrage nur bei positivem Abfrageergebnis freigibt.

Mit einer erfindungsgemäßen Ausführungsform eines Verfahrens zum Betreiben einer Werkzeugmaschine kann auf einfache Weise ermittelt werden, ob die Einrichtung in gewünschtem Umfang mit dem definierten Bereich der Werkzeugmaschine wirkverbunden ist. Eine Verletzung eines Anwenders durch einen Betrieb der Werkzeugmaschine ohne die Anbindung der Einrichtung oder mit einer fehlerhaften Anbindung der Einrichtung kann somit einfach erkannt und durch die Unterbindung eines Betriebs der Antriebseinrichtung auf anwenderseitige Anfrage sicher vermieden werden. Mit einem erfindungsgemäßen Verfahren somit auf einfache Weise zwischen einem sicheren Zustand mit installierter Einrichtung und einem unsicheren Zustand mit nicht oder nicht korrekt installierter Einrichtung unterscheidbar.

Das erfindungsgemäße Verfahren ist grundsätzlich bei sämtlichen Werkzeugmaschinen einsetzbar, die ein mit einer Abtriebswelle verbindbares Werkzeug aufweisen, so dass es auch bei Sägemaschinen, wie Kreissägen, Stichsägen, Säbelsägen oder dergleichen, Bohrmaschinen, Meißelhämmern oder dergleichen Anwendung finden kann.

Bei einer vorteilhaften Ausführungsform eines Verfahrens nach der Erfindung kann es vorgesehen sein, dass mit der Sensoreinrichtung ermittelt wird, ob ein Werkzeug auf definierte Weise mit der Abtriebswelle gekoppelt und/oder dass mit der Sensoreinrichtung ermittelt wird, ob eine Zusatzeinrichtung, insbesondere eine Schutzhaube, eine Absaugeinrichtung oder eine Griffeinrichtung, auf definierter Weise mit dem definierten Bereich der Werkzeugmaschine verbunden ist. Beispielsweise durch das Ermitteln einer fehlenden Schutzeinrichtung und einem dadurch unterbundenen Betrieb der Werkzeugmaschine kann eine Verletzung eines Anwenders einfach verhindert werden. Es können hierbei eine oder mehrere Sensoreinrichtungen vorgesehen sein, die jeweils das Vorhandensein und/oder eine gewünschte Positionierung eines Werkzeugs und/oder einer Zusatzeinrichtung überwachen. Wenn mehrere Sensoreinrichtungen vorgesehen sind, kann es vorgesehen sein, dass ein Betrieb der Werkzeugmaschine auf anwenderseitige Anfrage nur freigegeben wird, wenn mehrere, insbesondere sämtliche Sensoreinrichtungen das Vorhandensein und/oder eine gewünschte Positionierung des Werkzeugs und/oder der jeweiligen Zusatzeinrichtung detektieren.

Bei einer vorteilhaften Ausführungsform eines Verfahrens nach der Erfindung ist es vorgesehen, dass die Sensoreinrichtung zur Ermittlung eines Werkzeugtyps eines mit der Abtriebswelle gekoppelten Werkzeugs und/oder eines Typs der Zusatzeinrichtung anhand von in der Steuerungseinrichtung hinterlegten Informationen ausgeführt ist. Besonders vorteilhaft ist es, wenn die Steuerungseinrichtung Betriebsparameter der Antriebseinrichtung anhand des ermittelten Werkzeugtyps und/oder des ermittelten Typs der Zusatzeinrichtung einstellt und je nach Typ beispielsweise zwischen verschiedenen Betriebsmodi wechselt. Es kann hierbei vorgesehen sein, dass beispielsweise bei einer Ausführung der Werkzeugmaschine als Winkelschleifer, bei einer Erkennung eines als Schleifscheibe ausgeführten Werkzeugs ein erster Betriebsmodus, bei einer Erkennung eines als Trennscheibe ausgeführten Werkzeugs ein zweiter Betriebsmodus und bei einer Erkennung eines als Diamantscheibe ausgeführten Werkzeugs ein dritter Betriebsmodus von der Steuerungseinrichtung eingestellt wird. Die Betriebsmodi können sich beispielsweise hinsichtlich der verwendeten Drehzahlen im Betrieb der Werkzeugmaschine unterscheiden.

Besonders vorteilhaft ist es, wenn die Steuerungseinrichtung einen Betrieb der Antriebseinrichtung auf anwenderseitige Anforderung nur freigibt, wenn anhand des ermittelten Werkzeugtyps weitere in der Steuerungseinrichtung hinterlegte Parameter erfüllt sind. Beispielsweise kann es vorgesehen sein, dass bei der Ermittlung eines als Schleifscheibe ausgeführten Werkzeugs ein Betrieb der Antriebseinrichtung nur freigeben wird, wenn sich eine Schutzhaube in einer vordefinierten Position befindet und beispielsweise zusätzlich eine Absaugeinrichtung in Wirkverbindung mit der Werkzeugmaschine gebracht ist. Es kann vorgesehen sein, dass die Steuereinrichtung einem Anwender durch eine Ausgabeeinrichtung auf optische, akustische und/oder haptische Weise eine Rückmeldung gibt, wenn eine zum Betrieb der Antriebseinrichtung erforderliche Bedingung nicht vorliegt und dem Anwender beispielsweise auch eine Information übermittelt, was für einen Betrieb der Werkzeugmaschine erforderlich ist.

Die Sensoreinrichtung kann den Werkzeugtyp und/oder den Typ der Zusatzeinrichtung vorzugsweise anhand eines optischen, magnetischen und/oder elektrostatischen Wirkprinzips oder dergleichen ermitteln, wobei die jeweilige Einrichtung zum Zusammenwirken mit der Sensoreinrichtung ausgeführt ist. Beispielsweise kann es vorgesehen sein, dass das Werkzeug auf einer der Sensoreinrichtung zugewandten Oberfläche eine definierte Kennzeichnung bzw. ein definiertes Muster aufweist. Es kann vorgesehen sein, dass die Sensoreinrichtung eine Lichtquelle und einen Photodetektor aufweist, wobei das von der Lichtquelle ausgesendete Licht in Richtung des Werkzeugs gerichtet wird und anhand der von dem Photodetektor empfangenen Signale durch die Steuerungseinrichtung das Vorhandensein und/oder eine gewünschte Positionierung und/oder ein Typ des Werkzeugs ermittelt wird.

Des Weiteren wird die Aufgabe gelöst durch eine Werkzeugmaschine, insbesondere Winkelschleifer, mit einem mit einer Abtriebswelle in Wirkverbindung bringbaren Werkzeug, wobei die Werkzeugmaschine eine Antriebseinrichtung zur Betätigung der Abtriebswelle, eine Steuerungseinrichtung zur Betätigung der Antriebseinrichtung, wenigstens eine mit der Steuerungseinrichtung zusammenwirkende Sensoreinrichtung und eine in definierter Weise mit einem definierten Bereich der Werkzeugmaschine in Wirkverbindung bringbare Einrichtung, insbesondere das Werkzeug und/oder eine beispielsweise als Schutzhaube, Griffeinrichtung, Absaugeinrichtung oder dergleichen ausgeführten Zusatzeinrichtung bzw. Sicherheitseinrichtung aufweist, wobei die Werkzeugmaschine zur Durchführung des oben näher beschriebenen Verfahrens ausgeführt ist.

Die zum erfindungsgemäßen Verfahren angeführten Vorteile gelten entsprechend auch für eine erfindungsgemäß ausgeführte Werkzeugmaschine. Mit einer erfindungsgemäß ausgeführten Werkzeugmaschine ist somit auf einfache und sichere Weise eine Verletzung eines Anwenders für den Fall verhinderbar, dass wenigstens eine Einrichtung nicht oder nicht in gewünschtem Umfang mit dem definierten Bereich der Werkzeugmaschine in Wirkverbindung gebracht ist.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine stark vereinfachte Seitenansicht einer als Winkelschleifer ausgeführten Hand-werkzeugmaschine, wobei an einer Abtriebswelle des Winkelschleifers ein als Trennscheibe ausgeführtes Werkzeug angeordnet ist; und
- Fig. 2: ein Ablaufdiagramm einer Ausführungsform eines Verfahrens nach der Erfindung.

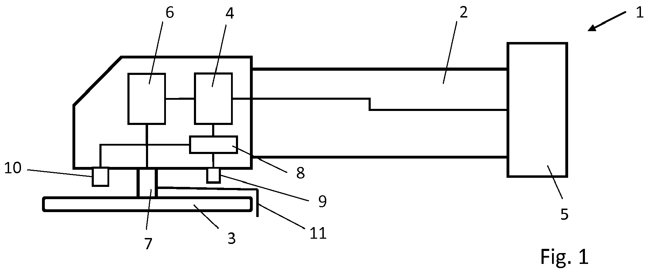

Fig. 1 zeigt eine Werkzeugmaschine hier eine Handwerkzeugmaschine 1 nach der Erfindung, die in der gezeigten Darstellung als Winkelschleifer ausgeführt ist. Entsprechend einer alternativen Ausgestaltungsform kann die Werkzeugmaschine 1 auch als Bohrmaschine, als Sägemaschine oder dergleichen ausgebildet sein.

Die in den Figuren als Winkelschleifer ausgeführte Werkzeugmaschine 1 weist ein Gehäuse 2 und ein beispielsweise als Trennscheibe ausgeführtes Werkzeug 3 auf. Das Gehäuse 2 weist vorzugsweise wenigstens einen Haltebereich auf, an dem ein Anwender die Werkzeugmaschine 1 mit einer oder beiden Händen halten und führen kann. Alternativ oder zusätzlich kann eine weitere Griffeinrichtung vorgesehen sein, die vorzugsweise lösbar mit dem Gehäuse 2 der Werkzeugmaschine 1 in Wirkverbindung bringbar ist und beispielsweise eine andere Arbeitsposition für den Anwender zur Verfügung stellt.

Das Werkzeug 3 ist von einem insbesondere als Elektromotor ausgeführten Antrieb bzw. einer Antriebseinrichtung 4 betätigbar, der insbesondere über einen mit der Werkzeugmaschine 1 verbindbaren Akkumulator 5 mit Strom versorgbar ist. Gemäß einer alternativen und nicht in den Figuren gezeigte Ausgestaltungsform kann die Werkzeugmaschine 1 auch über ein Stromkabel mit elektrischem Strom aus einem Netzwerk versorgt werden.

Der Antrieb 4 zur Betätigung des Werkzeugs 3 hier in einer drehenden Bewegung ist ebenso wie ein Getriebe 6 und eine Abtriebswelle 7 im Inneren des Gehäuses 2 angeordnet. Der beispielsweise als Elektromotor ausgeführte Antrieb 4, das Getriebe 6 und die Abtriebswelle 7 sind dabei so in dem Gehäuse 2 zueinander angeordnet und miteinander verbunden, dass ein von dem Elektromotor 4 erzeugtes Drehmoment auf das Getriebe 6 und schließlich auf die Abtriebswelle 7 übertragen werden kann. Ein sich frei drehendes und nach unten an dem Gehäuse 2 herausragendes Ende der Abtriebswelle 7 ist mit dem hier als Trennscheibe 3 ausgeführten Werkzeug beispielsweise über eine nicht näher ersichtliche Spanneinrichtung verbunden. Das Drehmoment der Abtriebswelle 7 kann somit auf die Trennscheibe 3 übertragen werden.

Die Werkzeugmaschine 1 weist weiterhin eine Steuerungseinrichtung 8 sowie vorliegend zwei Sensoreinrichtungen 9 und 10 auf. Die Sensoreinrichtungen 9 und 10 sind mit der Steuerungseinrichtung 8 elektrischen und elektronisch verbunden. Signale können zwischen den Sensoreinrichtungen 9 und 10 und der Steuerungseinrichtung 8 gesendet werden. Die Steuerungseinrichtung 8 ist wiederum mit dem Elektromotor 4 und dem Akkumulator 5 elektrisch und elektronisch verbunden. Signale können zwischen den Sensoreinrichtungen 9 und 10 und dem Elektromotor 4 sowie dem Akkumulator 5 gesendet werden. Die Steuerungseinrichtung 8 dient unter anderem zum Steuern und Regeln des Antriebs 4 sowie der Stromversorgung der Werkzeugmaschine 1.

Die erste Sensoreinrichtung 9 ist vorliegend als optische Sensoreinrichtung 9 ausgeführt, wobei mittels der ersten Sensoreinrichtung 9 ermittelbar ist, ob eine Schutzeinrichtung 11, beispielsweise eine Staubhaube, mit dem Werkzeugmaschine 1 verbunden ist. Darüber hinaus ist mit der ersten Sensoreinrichtung 9 vorzugsweise auch ermittelbar, ob die Schutzeinrichtung 11 in gewünschtem Umfang mit der Werkzeugmaschine 1 verbunden ist, also insbesondere korrekt montiert ist. Dies kann durch eine Auswertung der von der ersten Sensoreinrichtung 9 ermittelten Signale und beispielsweise einen Vergleich dieser Signale mit in der Steuerungseinrichtung 8 hinterlegten Parametern ermittelt werden.

Es kann dabei vorgesehen sein, dass die Steuerungseinrichtung 8 einen Betrieb der Werkzeugmaschine 1 und somit eine Betätigung des Antriebs 4 nur dann freigibt, wenn die Steuerungseinrichtung 8 das Vorhandensein und gegebenenfalls eine korrekte Montage der Schutzeinrichtung 11 ermittelt.

Die erste Sensoreinrichtung 9 ist vorzugsweise auch zur Ermittlung einer Position der Schutzeinrichtung 11 ausgeführt, wenn die Schutzeinrichtung 11 beispielsweise bei der Verwendung verschiedener Werkzeugarten, wie beispielsweise einer Trennscheibe oder einer Schleifscheibe, in verschiedenen Positionen bzw. Stellungen an dem Gehäuse 2 anbindbar ist.

Alternativ oder zusätzlich hierzu kann eine Sensoreinrichtung vorgesehen sein, mittels der das Vorhandensein und gegebenenfalls eine korrekte Montage einer Griffeinrichtung ermittelbar ist, die mit dem Gehäuse 2 der Werkzeugmaschine 1 in Wirkverbindung bringbar ist. Vergleichbar zu den obigen Ausführungen kann es vorgesehen sein, dass die Steuerungseinrichtung 8 einen Betrieb der Werkzeugmaschine 1 nur bei Vorliegen definierter Bedingungen freigibt.

In Fig. 1 ist weiterhin eine zweite Sensoreinrichtung 10 ersichtlich, welche vorliegend ebenfalls als optische Sensoreinrichtung ausgeführt ist. Mittels der zweiten Sensoreinrichtung 10 ist das Vorhandensein und insbesondere die korrekte Montage des Werkzeugs 3 analog der obigen Ausführungen zur ersten Sensoreinrichtung 9 ermittelbar. Es kann wiederum vorgesehen sein, dass ein Betrieb der Werkzeugmaschine 1 nur freigegeben wird, wenn das Vorhandensein eines Werkzeugs 3 und insbesondere zusätzlich eine Montage eines Werkzeugs 3 in gewünschtem Umfang ermittelt wird.

Die zweite Sensoreinrichtung 10 ist vorliegend zusätzlich zur Ermittlung einer Art des Werkzeugs 3 ausgeführt, wobei mittels der zweiten Sensoreinrichtung 10 beispielsweise über ein Zusammenwirken mit einer insbesondere spezifischen, beispielsweise in Umfangsrichtung des Werkzeugs 3 variierenden Oberfläche des jeweiligen Werkzeugs 3, die sich für verschiedene Werkzeugtypen definiert voneinander unterscheidet, im Zusammenspiel mit der Steuerungseinrichtung 8 die Art bzw. den Typ des eingesetzten Werkzeugs 3 ermittelbar ist.

In der Steuerungseinrichtung 8 können beispielsweise für jede Art bzw. jeden Typ von Werkzeug 3 verschiedene Bedingungen bzw. Parameter hinterlegt sein, die erfüllt sein müssen, um einen Betrieb der Werkzeugmaschine 1 freizugeben.

Alternativ oder zusätzlich hierzu kann es vorgesehen sein, dass in der Steuerungseinrichtung 8 verschiedene Betriebsmodi zur Ansteuerung des Antriebs 4 hinterlegt sind, wobei je nach ermitteltem Werkzeugtyp ein definierter Betriebsmodus eingestellt wird. Es kann beispielsweise vorgesehen sein, dass eine eingestellte Drehzahl der Abtriebswelle 7 sich je nach ermitteltem Werkzeugtyp voneinander unterscheidet, so dass die Werkzeugmaschine 1 beispielsweise bei ermittelter Schleifscheibe mit einer anderen Drehzahl betrieben wird als bei ermittelter Trennscheibe.

Alternativ zu der Ausführung der Sensoreinrichtungen 9, 10 als optische Sensoreinrichtungen können die erste Sensoreinrichtung 9 und die zweite Sensoreinrichtung 10 nach einem magnetischen, elektrostatischen oder anderem physikalischen Wirkprinzip arbeiten.

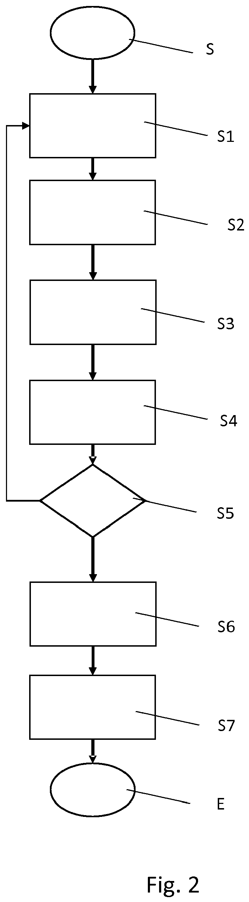

Fig. 2 zeigt vereinfacht den Ablauf einer Ausführungsform eines Verfahrens nach der Erfindung, mittels dem auf einfache und sichere Weise ein sicherer Betrieb der Werkzeugmaschine 1 sicherstellbar ist.

Das Verfahren beginnt mit dem Start S. In einem ersten Schritt S1 findet eine Anwenderseitige Betätigungsanforderung des Antriebs 4 beispielsweise durch eine Betätigung eines nicht näher ersichtlichen Schalters statt. Im Schritt S2 wird von der zweiten Sensoreinrichtung 10 das Vorhandensein und die Art bzw. der Typ des Werkzeugs ermittelt. Im Schritt S3 werden die für den ermittelten Werkzeugtyp erforderlichen Rahmenbedingungen in der Steuerungseinrichtung 8 ermittelt. Es kann beispielsweise vorgesehen sein, dass für den aktuell ermittelten Werkzeugtyp das Vorhandensein der Schutzeinrichtung 11 in einer definierten Position erforderlich ist.

Im Schritt S4 wird mittels der ersten Sensoreinrichtung 9 ermittelt, ob die Schutzeinrichtung 11 einerseits vorhanden ist und andererseits in der gewünschten Position montiert ist. Im Folgenden Schritt S5 wird überprüft, ob sämtliche für den ermittelten Werkzeugtyp erforderlichen Bedingungen erfüllt sind. Ist dies nicht der Fall, wird das Verfahren hier mit Schritt S1 fortgesetzt. Sind sämtliche hinterlegte Bedingungen dagegen erfüllt wird das Verfahren mit Schritt S6 fortgesetzt, wobei in diesem Schritt vorliegend ein für den ermittelten Werkzeugtyp in der Steuerungseinrichtung 8 hinterlegter Betriebsmodus eingestellt wird.

Im darauffolgenden Schritt S7 wird vorliegend der Betrieb der Werkzeugmaschine 1 freigegeben, so dass der Anwender in gewünschtem Umfang sicher mit der Werkzeugmaschine 1 arbeiten kann. Im Schritt E wird das Verfahren insbesondere dann beendet, wenn der Elektromotor 3 anwenderseitig nicht mehr betätigt wird.

## Patentansprüche

1. Verfahren zum Betreiben einer Werkzeugmaschine (1), insbesondere eines Winkelschleifers, mit einem mit einer Abtriebswelle (7) drehbar in Wirkverbindung bringbaren Werkzeug (3), wobei die Werkzeugmaschine (1) eine Antriebseinrichtung (4) zur Betätigung der Abtriebswelle (7), eine Steuerungseinrichtung (8) zur Betätigung der Antriebseinrichtung (4) und wenigstens eine mit der Steuerungseinrichtung (8) wirkverbundene Sensoreinrichtung (9, 10) aufweist, **dadurch gekennzeichnet, dass** mittels der Sensoreinrichtung (9, 10) ermittelt wird, ob eine Einrichtung (3, 11) in definierter Weise mit einem definierten Bereich der Werkzeugmaschine (1) wirkverbunden ist und die Steuerungseinrichtung (8) einen Betrieb der Antriebseinrichtung (4) nur bei positivem Abfrageergebnis freigibt.

2. Verfahren nach Anspruch 1, **dadurch gekennzeichnet, dass** mit der Sensoreinrichtung (10) ermittelt wird, ob ein Werkzeug (3) mit der Abtriebswelle (7) gekoppelt ist.

3. Verfahren nach Anspruch 1 oder 2, **dadurch gekennzeichnet, dass** mit der Sensoreinrichtung (9) ermittelt wird, ob eine Zusatzeinrichtung (11), insbesondere eine Schutzhaube oder eine Griffeinrichtung, auf definierter Weise mit dem definierten Bereich der Werkzeugmaschine (1) verbunden ist.

4. Verfahren nach einem der Ansprüche 1 bis 3, **dadurch gekennzeichnet, dass** die Sensoreinrichtung (9, 10) zur Ermittlung eines Werkzeugtyps eines mit der Abtriebswelle (7) gekoppelten Werkzeugs (3) und/oder eines Typs der Zusatzeinrichtung (11) anhand von in der Steuerungseinrichtung (8) hinterlegten Informationen ausgeführt ist.

5. Verfahren nach Anspruch 4, **dadurch gekennzeichnet, dass** die Steuerungseinrichtung (8) Betriebsparameter der Antriebseinrichtung (4) anhand des ermittelten Werkzeugtyps einstellt.

6. Verfahren nach Anspruch 4 oder 5, **dadurch gekennzeichnet, dass** die Steuerungseinrichtung (8) einen Betrieb der Antriebseinrichtung (4) nur freigibt, wenn anhand des ermittelten Werkzeugtyps weitere in der Steuerungseinrichtung (8) hinterlegte Parameter erfüllt sind.

7. Verfahren nach einem der Ansprüche 1 bis 6, **dadurch gekennzeichnet, dass** die Sensoreinrichtung (9, 10) den Werkzeugtyp und/oder den Typ der Zusatzeinrichtung nach einem optischen, elektrostatischen und/oder magnetischen Wirkprinzip ermittelt.

8. Werkzeugmaschine (1), insbesondere Winkelschleifer, zur Durchführung eines Verfahrens nach einem der Ansprüche 1 bis 7 mit einem mit einer Abtriebswelle (7) drehbar in Wirkverbindung bringbaren Werkzeug (3), wobei die Werkzeugmaschine (1) eine Antriebseinrichtung (4) zur Betätigung der Abtriebswelle (7), eine Steuerungseinrichtung (8) zur Betätigung der Antriebseinrichtung (4), wenigstens eine mit der Steuerungseinrichtung (8) zusammenwirkende Sensoreinrichtung (9, 10) und eine in definierter Weise mit einem definierten Bereich der Werkzeugmaschine (1) in Wirkverbindung bringbare Einrichtung (3, 11) aufweist.
